# EUROPEAN PATENT SPECIFICATION

(11) **EP 4 184 893 B1**
(45) Date of publication and mention of the grant of the patent: **30.09.2026**
(21) Application number: 22188939.7
(22) Date of filing: 05.08.2022
(51) Int. Cl.: G06Q 10/0631, G06Q 10/20, G06Q 50/40, H04L 67/12, B64D 11/04

(54) **DECENTRAL DATA MANAGEMENT**
DEZENTRALE DATENVERWALTUNG
GESTION DE DONNÉES DÉCENTRALISÉE

(30) Priority: 22.11.2021 US 202163281842 P
(43) Date of publication of application: 24.05.2023
(73) Proprietor: Safran Cabin Germany GmbH, 35745 Herborn (DE)
(72) Inventor: KUSCH, Alexander, 35745 HERBORN (DE); WILL, Christian, 35745 HERBORN (DE)
(74) Representative: Casalonga

(56) References cited:
- EP-A1- 3 718 891
- US-A1- 2011 238 742

## Description

### TECHNICAL FIELD

The present invention relates to a system for decentral data management, as it can be used, for example, in transport vehicles such as, for example, aircrafts, trains, busses, trucks, ships or cars, more particularly, passenger transport vehicles for passenger transportation such as, for example, passenger aircrafts, passenger trains, passenger busses, passenger trucks, passenger ships or passenger cars, and even more particularly, for respective lavatories, cabins, galleys and/or kitchenettes on said passenger transport vehicles such as, for example, a lavatory, a cabin, a galley and/or a kitchenette of an aircraft, a lavatory, a cabin, a galley and/or a kitchenette of a train, a lavatory, a cabin, a galley and/or a kitchenette on a bus, a lavatory, a cabin, a galley and/or a kitchenette on a truck, a lavatory, a cabin, a galley and/or a kitchenette on a ship or a lavatory, a cabin, a galley and/or a kitchenette of a RV (recreational vehicle). Maintenance is intended to ensure that the functional conditions of certain components and entire systems are maintained or, in the event of a fault and/or failure, are restored.

Hereafter, reference is mostly made to a passenger aircraft and a galley in said passenger aircraft as exemplary implementation of the present invention in an exemplarily transport vehicle.

### BACKGROUND ART

In the prior art information is distributed via a central cabin management system with an additional central server and, possibly, additional hardware and/or an additional OEM network backbone. EP 3718891 A1 and US 2011/238742 A1 represent relevant prior art.

### PROBLEMS ASSOCIATED WITH THE PRIOR ART

The information is hosted and processed locally on one central server. Thus, there is no redundancy. Continuous operation in case of failure of the one central server cannot be ensured. In addition, there is more hardware and wirings required than in the proposed solution of the present invention.

Within an exemplary aircraft, which may comprise at least one galley, per galley, there may be at least one information system. One technical problem to solve may be the development of a decentral data management system which is capable of distributing the necessary amount of data to all connected devices to allow information sharing, load balancing, redundancy and a smart self-organized operation of the different information system instances, for example, including an ethernet protocol.

In addition, there is currently an inability of the system in the prior art to synchronize the information between multiple devices/controllers located across the cabin without an additional central server and, possibly, additional hardware and/or an OEM network backbone. This problem arose in the context of a multiple galley aircraft, such as a wide body aircraft with AFT and/or FWD galleys, where crew members need to know real-time food item inventory that is located in all galleys of the whole aircraft along with food requests from the passengers. This requires data synchronization between all information system devices such as galley information systems.

Lastly, each individual information system has limited processing power. By distributing processes across multiple information systems, the processing power of the overall system is increased.

### SUMMARY OF THE INVENTION

The invention as provided in claim 1 solves the above-mentioned problems of the prior art. Preferred embodiments are presented in the dependent claims.

Sensors used in the present invention may be of any kind of individually known type of sensors, such as for example digital or analog sensors. Non-limiting examples are described below.

### TECHNICAL SOLUTIONS AND ADVANTAGEOUS EFFECTS OF THE INVENTION

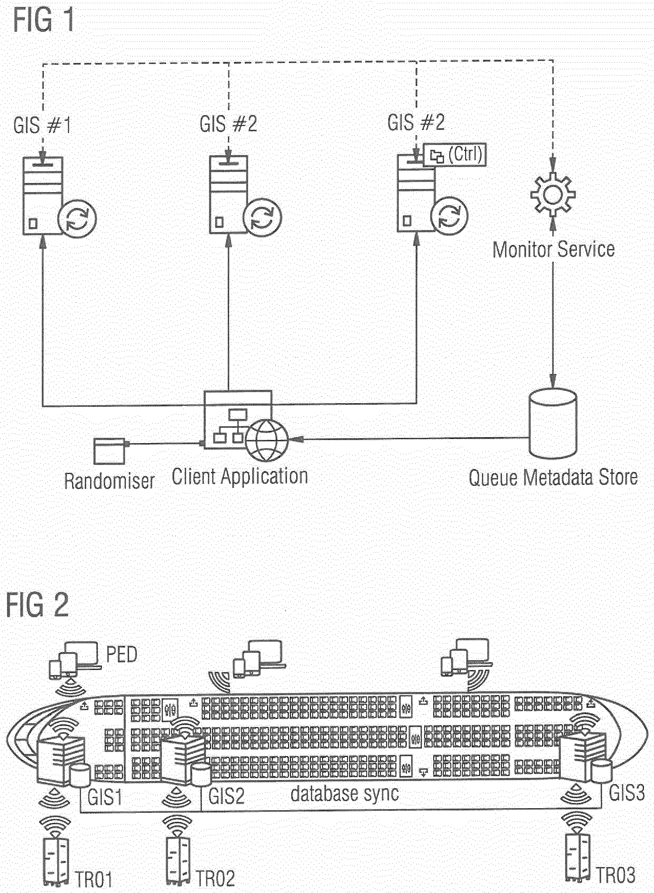

The information system such as, for example a Galley Information System (GIS) developed by the applicant collects, stores and/or processes data from various sources such as sensors, trolleys, electrical inserts, passengers or cabin crew to optimize operating processes for airlines, e.g., by implementing predictive health monitoring and catering data management. For example, an information system 3 collects sensor data for predictive health monitoring while another information system 2 has the latest information on the content of a trolley TR02 (cf. Fig. 2). The present invention aims to distribute and process the data such that they can be accessed from all information systems throughout the entire cabin without requiring an additional central server and, possibly, additional hardware and/or an additional OEM network backbone. Instead, decentral data management within an information system network is foreseen. Decentralising the data and functions improves significantly the reliability and redundancy.

All information systems are able to collect, store and/or process the following data and information:
- status information of the cabin components in transport vehicles (in particular, galleys, lavatories, inserts)
- fault and failure data of the cabin components in transport vehicles (in particular, galleys, lavatories, inserts)
- predictive health monitoring results
- food item level detection
- catering data management
- trolley localisation and status information
- machine learning catering
- water and waste status information
- statistics data
- operation of electrical inserts
- provide data to cellular modems to connect to central maintenance on ground

Stakeholders accessing the information system such as, for example, a GIS and its data are:
- flight crew
- maintenance crew
- OEM
- airlines
- galley and electrical inserts manufacturers
- customers and/or passengers

Predictive health monitoring aims at detecting failures automatically before they occur. This requires a gathering of sensor data and analysis algorithms to predict failures. For example, in the past, fault detection was only possible by identifying its failure effect, i.e., a not illuminating lighting unit. However, by measuring the current consumption of the light source via a sensor, it is possible to detect a changing trend in the current consumption and, in turn, triggering a maintenance task to replace the light before it actually fails. Due to the automatic detection of a fault, it does not need to evolve into a failure that is eventually detected by a crew member. Furthermore, the corresponding information can be directly forwarded to the supplier of the specific part or to the maintenance organization without the need of digitizing, either after arrival of the aircraft or even during flight if a ground link is available. The information about the failure cannot be lost and system internal failure data can be attached so that troubleshooting time can be reduced. Based on the detailed failure information, order or repair proposals can be derived also reducing the delay induced by the communication between part supplier, maintenance organization and airline.

The information system is also able to ease the catering process: All relevant catering stock management information will be automatically collected, stored and processed by the information system. It starts with the information of the loading from the caterer to the aircraft, the detection of the in and out of the trolley during the service rounds to the summary of consumption at the end of the flight. This includes data that provides quantity and location of stock inventory in the aircraft galleys and trolleys and all relevant catering stock information to generate reports about consumption, waste and handover. The data is obtained by sensors placed in key areas of the transport vehicle, galleys and trolleys which enables the automatic detection of food and beverage items as an inventory for the catering service. Positioning sensors or devices at the trolleys will provide location information to a stock management system at the galley. This digital exchange of data and information provides a real-time stock status, which makes the cabin service more efficient. Basic routines when organizing the cabin service and preparing the meals will be automated. This gives the flight crew more time to care about the passenger's needs. In addition, the data generated can be used for analysis with artificial intelligence. Per aircraft, flight route, passenger composition and utilization, the network learns and decides and actively proposes the catering needs. As a result, the operating and business processes are resource-saving optimized and the performance of the galley system is enhanced by increased automation.

### BENEFIT OF DECENTRAL DATA MANAGEMENT FOR CUSTOMERS

The aim of this invention is to connect the different information systems such that all data is synchronized between the different instances in order to allow the different stakeholders to access the full information relevant for them at one instance only. Furthermore, it is intended that the electrical inserts can be operated from a central point via the information system network.

### TECHNICAL ADVANTAGES

Besides the benefit for the stakeholders and customers which can access all data throughout the cabin of the transport vehicle, there are significant technical advantages.

First, by decentralising the information, redundancy can be ensured without any additional server hardware or system. Decentral data management improves the reliability of the system: the full database information is and remains available even at an information system's failure.

A smart set-up is intended, i.e., tasks are automatically distributed in the information system network. For example, information system 1 takes over the tasks regarding catering information, information system 2 monitors sensors and analysis data for predictive health monitoring, information system 3 is a back-up. The distribution of task is done automatically and takes into account external events and conditions: if one information system fails, another one continues. In case, one of the information systems is overloaded, a load balancing function re-distributes the load. A master/slave (primary/secondary) functionality can be included to this aim.

This is done via an always-on monitor service that polls every information system, determining whether or not nodes are alive. New queues or tasks will be registered with this service, and it should keep an up-to-date registry, providing metadata about the information systems and their queues.

The client application, on initial load, should poll this service and retrieve the metadata, which should then be retained for incoming requests. Should a request fail due to the fact that a node becomes compromised, the client application can poll the information system queue metadata store, return up-to-date information system metadata, and re-route the message to a working information system (cf. Fig. 1)

### SOLUTION

The decentral data management providing the benefits and advantages listed above is realized by connecting the information system instances, for example, via an ethernet protocol, such that a smart information system network is set up.

### DESCRIPTION OF THE DRAWINGS

**Fig. 1** shows a possible example of the load balancing in a decentral data management system according to one embodiment of the present invention;
**Fig. 2** shows a possible example of a decentral data management system according to one embodiment of the present invention;
**Fig. 3** shows the physical architecture of a Galley Information System (GIS) that may be used in the system of the present invention.

### DETAILED DESCRIPTION OF THE DRAWINGS

The following detailed description of the drawings will discuss preferred embodiments of a system according to the invention and a method according to the invention.

Although the given examples are described for a galley in a passenger aircraft, said features can, in principle, be implemented in any transport vehicle mentioned above, in particular, any passenger transport vehicle mentioned above and any respective cabin thereof.

Fig. 1 shows a possible example of the load balancing in a decentral data management system according to one embodiment of the present invention. For the at least two information systems, an exemplary three Galley Information Systems GIS1, GIS2 and GIS3 are shown, which are connected to a monitor service as described above. The monitor service is connected to a queue metadata store. A client application can poll the information system queue metadata store, return up-to-date information system metadata, and re-route the message to a working information system.

**Fig. 2** shows a possible example of a decentral data management system according to one embodiment of the present invention. This example exemplarily depicts three GIS as information system, three trolleys and a plurality of personal devices, which are all connected in a decentral data management network. For example, a GIS3 collects sensor data for predictive health monitoring while another GIS2 has the latest information on the content of a trolley TR02 and GIS3 is a back-up (cf. Fig. 2).

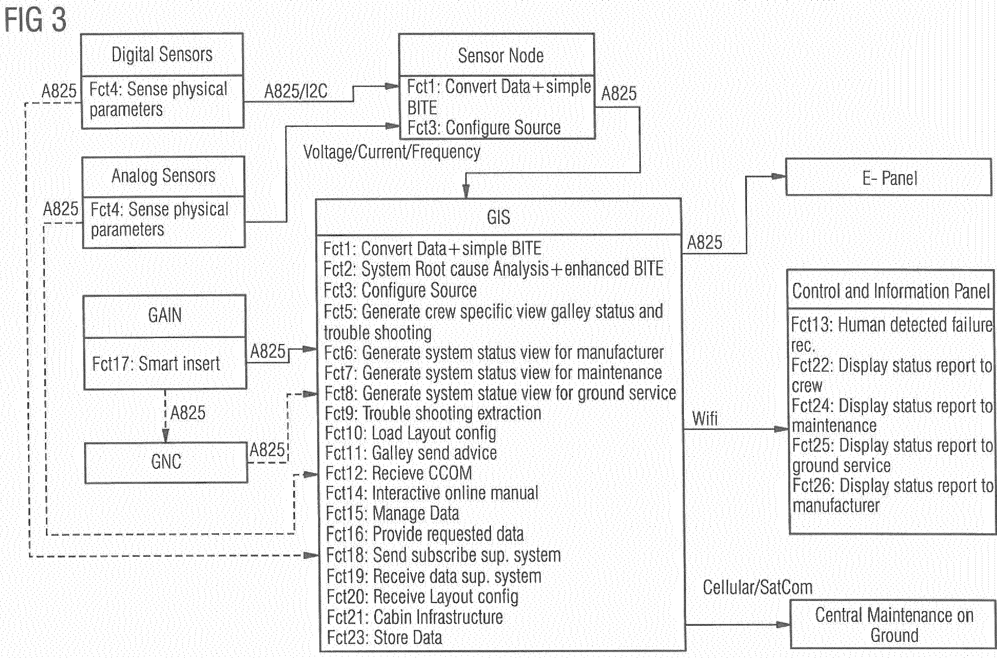

The physical architecture of a Galley Information System (GIS) as a possible information system shown in **Fig. 3** has been developed.

The exemplary physical architecture shown in **Fig. 3** may comprise at least one digital sensor and/or at least one analog sensor, which both can sense physical parameters (Fct 14) and which are connected to at least one sensor node, which can convert data and simple BITE (Fct 1) and configure source data (Fct 3), to provide data about, for example, voltages, currents and/or frequencies. The sensor node may provide data to the galley information system (GIS), which is an example how the functional and logical architecture shown in Fig. 1 could be physically implemented in a cabin of a transport vehicle such as a passenger aircraft. Such a GIS also receives data from the digital and analog sensors, a galley insert equipment (GAIN) and a galley network controller (GNC). The GIS may provide data to an e-panel, a central maintenance center on the ground, optionally via cellular or satellite communication, and/or a control and information panel via Wi-Fi comprising the features of the human machine interface (HMI) and human detected failure recordings (Fct 13).

When installed in passenger aircraft, a system according to the invention is part of the galley system installed in the aircraft, but enables a completely digitized cabin maintenance process. Thus, points of interaction are both Human-Machine-Interfaces (HMIs) and Machine-to-Machine (M2M) Interfaces.

### ALTERNATIVE EMBODIMENTS

This invention describes a solution for an aircraft comprising several information systems located within said aircraft, for example in one of the plurality of galleys, but similar methods could be used for other transport vehicles as mentioned above.

This invention can be applied to commercial aircrafts. Since no higher-level systems and hardware/wiring is required, this invention is also intended for the retrofit market. The aforementioned embodiments are meant to be examples useful for understanding the invention. The present invention is only defined by the appended claims.

### INDUSTRIAL APPLICABILITY

This invention can be applied in decentral data management in transport vehicles such as, for example, commercial aircraft galleys.

### LIST OF ABBREVIATIONS

- GIS: Galley Information System
- OEM: Original Equipment Manufacturer
- AFT: Toward the Stern
- FWD: Forward
- PED: Personal Devices
- BITE: Built in Test Equipment
- GAIN: Gallery Insert Equipment
- GNC: Galley Network Controller
- HMI: Human Machine Interface
- M2M: Machine-to-machine

## Claims

1. A system for decentral data management in a transport vehicle, the system comprising:
at least two information systems (GIS#1, GIS#2, GIS#3),
at least one sensor,
an always-on monitor service,
an information system queue metadata store, a plurality of personal electronic devices and a client application
wherein the system does not have a central server,
wherein every information system (GIS#1, GIS#2, GIS#3) is configured to collect, store and process all data from the at least one sensor and the plurality of personal electronic devices (PED),
wherein data can be distributed and processed within the system such that all data can be accessed from every information system of the at least two information systems (GIS#1, GIS#2, GIS#3) within the system without requiring an original equipment manufacturer OEM network backbone, wherein the always-on monitor service is configured to poll every information system of the at least two information systems (GIS#1, GIS#2, GIS#3), determining whether or not nodes of the information system are alive, and to keep an up-to-date registry, providing metadata about the at least two information systems and their queues, wherein the always-on monitor service is connected to the information system queue metadata store,
wherein the system is configured such that tasks are automatically distributed in the information system network, and
wherein the client application is configured to, on initial load, poll the always-on monitor service and retrieve the metadata, which is then retained for incoming requests, and should a request fail due to a node of an information system of the at least two information systems, becoming compromised, poll the information system queue metadata store, return up-to-date information system metadata, and re-route the message to a working information system of the at least two information systems (GIS#1, GIS#2, GIS#3).

2. The system according to claim 1, wherein all data is collected, stored and processed in at least two of the at least two information systems (GIS#1, GIS#2, GIS#3) by decentralizing the information to achieve redundancy of all data in the system without requiring the central server and/or additional hardware and/or without an OEM network backbone.

3. The system according to any preceding claims, wherein the system comprises an ethernet protocol, which is capable of distributing the necessary amount of data to all information systems (GIS#1, GIS#2, GIS#3) of the system to allow data sharing, load balancing, redundancy and/or smart self-organized operation of the information systems (GIS#1, GIS#2, GIS#3) in the system.

4. The system according to any preceding claims, wherein at least two of the at least two information systems (GIS#1, GIS#2, GIS#3) and/or all data are synchronized between the at least two information systems (GIS#1, GIS#2, GIS#3) without the central server and/or without additional hardware and/or without an OEM network backbone.

5. The system according to any preceding claims, wherein data processes are distributed between at least two of the at least two information systems (GIS#1, GIS#2, GIS#3) without the central server and/or without additional hardware and/or without an OEM network backbone.

6. The system according to any preceding claims, wherein data processes are distributed automatically, wherein data processes can be distributed automatically taking into account the load of each information system and/or external features.

7. The system according to any preceding claims, wherein each information system (GIS#1, GIS#2, GIS#3) detects, collects, stores and processes the data automatically.

8. The system according to any preceding claims, wherein the data is provided in real-time to each of the at least two information systems (GIS#1, GIS#2, GIS#3).

9. The system according to any preceding claims, wherein processes and tasks are automatically distributed between the at least two information systems (GIS#1, GIS#2, GIS#3).

10. The system according to claim 7, wherein the processes and tasks include catering information, sensor monitoring, data analysis for predictive health monitoring of system components and/or back-up thereof.

11. The system according to any preceding claims, wherein the system includes an always-on monitoring service that assesses the information systems (GIS#1, GIS#2, GIS#3) and the nodes of the systems and that registers queues and/or tasks.

12. The system according to any preceding claims, wherein the system includes artificial intelligence.

13. The system according to any preceding claims, wherein each stakeholder such as, for example, flight crew, maintenance crew, OEM, airlines, galley and electrical inserts manufacturers, customers and/or passengers can access all data from every information system.

14. The system according to any preceding claims, wherein electrical inserts can be operated from all information systems (GIS#1, GIS#2, GIS#3).

15. The system according to any preceding claims, wherein the system is used in a transport vehicle such as, for example, aircrafts, trains, busses, trucks, ships or cars, and/or at least one galley and/or at least one trolley.

16. The system according to any preceding claims, wherein the information system is a galley information system.

## Patentansprüche

1. System zur dezentralen Datenverwaltung in einem Transportfahrzeug, wobei das System umfasst:
mindestens zwei Informationssysteme (GIS#1, GIS#2, GIS#3), mindestens einen Sensor,
einen ständig aktiven Überwachungsdienst,
einen Metadatenspeicher für Informationssystemwarteschlangen, eine Vielzahl von persönlichen elektronischen Vorrichtungen und eine ClientAnwendung
wobei das System keinen Zentralserver aufweist,
wobei jedes Informationssystem (GIS#1, GIS#2, GIS#3) so konfiguriert ist, dass es alle Daten des mindestens einen Sensors und der Vielzahl von persönlichen elektronischen Vorrichtungen (PED) sammelt, speichert und verarbeitet,
wobei Daten innerhalb des Systems so verteilt und verarbeitet werden können, dass auf alle Daten von jedem Informationssystem der mindestens zwei Informationssysteme (GIS#1, GIS#2, GIS#3) innerhalb des Systems zugegriffen werden kann, ohne dass ein Netzwerk-Backbone für Originalausrüstungshersteller (OEM) erforderlich ist,
wobei der ständig aktive Überwachungsdienst so konfiguriert ist, dass er jedes Informationssystem der mindestens zwei Informationssysteme (GIS#1, GIS#2, GIS#3) abfragt, um zu bestimmen, ob Knoten des Informationssystems aktiv sind oder nicht, und dass er ein aktuelles Register führt, das Metadaten über die mindestens zwei Informationssysteme und deren Warteschlangen bereitstellt, wobei der ständig aktive Überwachungsdienst mit dem Metadatenspeicher der Informationssystemwarteschlange verbunden ist,
wobei das System so konfiguriert ist, dass Aufgaben automatisch im Informationssystemnetzwerk verteilt werden, und
wobei die Clientanwendung so konfiguriert ist, dass sie beim anfänglichen Laden den ständig aktiven Überwachungsdienst abfragt und die Metadaten abruft, die dann für eingehende Anfragen aufbewahrt werden, und sollte eine Anfrage aufgrund einer Kompromittierung eines Knotens eines Informationssystems der mindestens zwei Informationssysteme fehlschlagen, fragt sie den Metadatenspeicher der Informationssystemwarteschlange ab, gibt aktuelle Metadaten des Informationssystems zurück und leitet die Nachricht an ein funktionierendes Informationssystem der mindestens zwei Informationssysteme (GIS#1, GIS#2, GIS#3) um.

2. System nach Anspruch 1, wobei alle Daten in mindestens zwei der mindestens zwei Informationssysteme (GIS#1, GIS#2, GIS#3) gesammelt, gespeichert und verarbeitet werden, indem die Informationen dezentralisiert werden, um eine Redundanz aller Daten im System zu erreichen, ohne dass der zentrale Server und/oder zusätzliche Hardware und/oder ein OEM-Netzwerk-Backbone erforderlich sind.

3. System nach einem der vorhergehenden Ansprüche, wobei das System ein Ethernet-Protokoll umfasst, das in der Lage ist, die erforderliche Datenmenge an alle Informationssysteme (GIS#1, GIS#2, GIS#3) des Systems zu verteilen, um Datenaustausch, Lastausgleich, Redundanz und/oder intelligenten, selbstorganisierten Betrieb der Informationssysteme (GIS#1, GIS#2, GIS#3) im System zu ermöglichen.

4. System nach einem der vorhergehenden Ansprüche, wobei mindestens zwei der mindestens zwei Informationssysteme (GIS#1, GIS#2, GIS#3) und/oder alle Daten zwischen den mindestens zwei Informationssystemen (GIS#1, GIS#2, GIS#3) ohne den zentralen Server und/oder ohne zusätzliche Hardware und/oder ohne ein OEM-Netzwerk-Backbone synchronisiert werden.

5. System nach einem der vorhergehenden Ansprüche, wobei Datenprozesse zwischen mindestens zwei der mindestens zwei Informationssysteme (GIS#1, GIS#2, GIS#3) ohne den zentralen Server und/oder ohne zusätzliche Hardware und/oder ohne ein OEM-Netzwerk-Backbone verteilt sind.

6. System nach einem der vorhergehenden Ansprüche, wobei Datenprozesse automatisch verteilt werden, wobei Datenprozesse unter Berücksichtigung der Last jedes Informationssystems und/oder externer Merkmale automatisch verteilt werden können.

7. System nach einem der vorhergehenden Ansprüche, wobei jedes Informationssystem (GIS#1, GIS#2, GIS#3) die Daten automatisch erkennt, sammelt, speichert und verarbeitet.

8. System nach einem der vorhergehenden Ansprüche, wobei die Daten in Echtzeit jedem der mindestens zwei Informationssysteme (GIS#1, GIS#2, GIS#3) bereitgestellt werden.

9. System nach einem der vorhergehenden Ansprüche, wobei Prozesse und Aufgaben automatisch zwischen den mindestens zwei Informationssystemen (GIS#1, GIS#2, GIS#3) verteilt werden.

10. System nach Anspruch 7, wobei die Prozesse und Aufgaben Cateringinformationen, Sensorüberwachung, Datenanalyse zur vorausschauenden Zustandsüberwachung von Systemkomponenten und/oder deren Backup einschließen.

11. System nach einem der vorhergehenden Ansprüche, wobei das System einen ständig aktiven Überwachungsdienst einschließt, der die Informationssysteme (GIS#1, GIS#2, GIS#3) und die Knoten der Systeme bewertet und Warteschlangen und/oder Aufgaben registriert.

12. System nach einem der vorhergehenden Ansprüche, wobei das System künstliche Intelligenz einschließt.

13. System nach einem der vorhergehenden Ansprüche, wobei jeder Beteiligte, wie beispielsweise Flugbesatzung, Wartungspersonal, OEM, Fluggesellschaften, Hersteller von Bordküchen- und Elektroeinsätzen, Kunden und/oder Passagiere, von jedem Informationssystem aus auf alle Daten zugreifen kann.

14. System nach einem der vorhergehenden Ansprüche, wobei elektrische Einsätze von allen Informationssystemen (GIS#1, GIS#2, GIS#3) aus bedient werden können.

15. System nach einem der vorhergehenden Ansprüche, wobei das System in einem Transportfahrzeug, wie beispielsweise in Flugzeugen, Zügen, Bussen, Lkw, Schiffen oder Autos, und/oder in mindestens einer Bordküche und/oder mindestens einem Servicewagen verwendet wird.

16. System nach einem der vorhergehenden Ansprüche, wobei das Informationssystem ein Bordkücheninformationssystem ist.

## Revendications

1. Système de gestion décentralisée de données dans un véhicule de transport, le système comprenant :
au moins deux systèmes d'informations (GIS#1, GIS#2, GIS#3),
au moins un capteur,
un service de surveillance permanent,
un magasin de méta-données de file d'attente de systèmes d'informations, une pluralité de dispositifs électroniques personnels et une application client
dans lequel le système n'a pas de serveur central,
dans lequel chaque système d'informations (GIS#1, GIS#2, GIS#3) est configuré pour collecter, stocker et traiter toutes les données provenant dudit au moins un capteur et de la pluralité de dispositifs électroniques personnels (PED),
dans lequel des données peuvent être distribuées et traitées au sein du système de sorte qu'il est possible d'accéder à toutes les données depuis chaque système d'informations des au moins deux systèmes d'informations (GIS#1, GIS#2, GIS#3) au sein du système sans nécessiter un réseau dorsal de fabricant d'équipement d'origine OEM,
dans lequel le service de surveillance permanent est configuré pour interroger chaque système d'informations des au moins deux systèmes d'informations (GIS#1, GIS#2, GIS#3), en déterminant si des nœuds du système d'informations sont actifs ou non, et pour maintenir un registre à jour, en fournissant des méta-données concernant les au moins deux systèmes d'informations et leurs files d'attente, dans lequel le service de surveillance permanent est connecté au magasin de méta-données de file d'attente de systèmes d'informations,
dans lequel le système est configuré de sorte que des tâches sont automatiquement distribuées dans le réseau de systèmes d'informations, et
dans lequel l'application client est configurée pour, lors de la charge initiale, interroger le service de surveillance permanent et récupérer les méta-données, qui sont ensuite conservées pour des requêtes entrantes, et si une requête échoue en raison d'un nœud d'un système d'informations des au moins deux systèmes d'informations qui devient compromis, interroger le magasin de méta-données de file d'attente de systèmes d'informations, renvoyer des méta-données de système d'informations à jour, et réacheminer le message vers un système d'informations de travail des au moins deux systèmes d'informations (GIS#1, GIS#2, GIS#3).

2. Système selon la revendication 1, dans lequel toutes les données sont collectées, stockées et traitées dans au moins deux des au moins deux systèmes d'informations (GIS#1, GIS#2, GIS#3) en décentralisant les informations pour obtenir une redondance de toutes les données dans le système sans nécessiter de serveur central et/ou matériel supplémentaire et/ou sans un réseau dorsal OEM.

3. Système selon l'une quelconque des revendications précédentes, dans lequel le système comprend un protocole Ethernet, qui est capable de distribuer la quantité nécessaire de données à tous les systèmes d'informations (GIS#1, GIS#2, GIS#3) du système pour permettre un partage de données, un équilibrage de charge, une redondance et/ou un fonctionnement autogéré intelligent des systèmes d'informations (GIS#1, GIS#2, GIS#3) dans le système.

4. Système selon l'une quelconque des revendications précédentes, dans lequel au moins deux des au moins deux systèmes d'informations (GIS#1, GIS#2, GIS#3) et/ou toutes les données sont synchronisés entre les au moins deux systèmes d'informations (GIS#1, GIS#2, GIS#3) sans le serveur central et/ou sans matériel supplémentaire et/ou sans un réseau dorsal OEM.

5. Système selon l'une quelconque des revendications précédentes, dans lequel des traitements de données sont distribués entre au moins deux des au moins deux systèmes d'informations (GIS#1, GIS#2, GIS#3) sans le serveur central et/ou sans matériel supplémentaire et/ou sans un réseau dorsal OEM.

6. Système selon l'une quelconque des revendications précédentes, dans lequel des traitements de données sont distribués automatiquement, dans lequel des traitements de données peuvent être distribués automatiquement en tenant compte de la charge de chaque système d'informations et/ou de caractéristiques externes.

7. Système selon l'une quelconque des revendications précédentes, dans lequel chaque système d'informations (GIS#1, GIS#2, GIS#3) détecte, collecte, stocke et traite les données automatiquement.

8. Système selon l'une quelconque des revendications précédentes, dans lequel les données sont fournies en temps réel à chacun des au moins deux systèmes d'informations (GIS#1, GIS#2, GIS#3).

9. Système selon l'une quelconque des revendications précédentes, dans lequel des traitements et tâches sont automatiquement distribués entre les au moins deux systèmes d'informations (GIS#1, GIS#2, GIS#3).

10. Système selon la revendication 7, dans lequel les traitements et tâches comportent des informations d'approvisionnement, une surveillance de capteur, une analyse de données pour une surveillance prédictive de l'état de fonctionnement des composants système et/ou une sauvegarde de ceux-ci.

11. Système selon l'une quelconque des revendications précédentes, dans lequel le système comporte un service de surveillance permanent qui évalue les systèmes d'informations (GIS#1, GIS#2, GIS#3) et les nœuds des systèmes et qui enregistre des files d'attente et/ou des tâches.

12. Système selon l'une quelconque des revendications précédentes, dans lequel le système comporte une intelligence artificielle.

13. Système selon l'une quelconque des revendications précédentes, dans lequel chaque partie prenante telle que, par exemple, équipage de vol, équipe de maintenance, OEM, compagnies aériennes, fabricants de cuisine de bord et d'inserts électriques, clients et/ou passagers, peut accéder à toutes les données auprès de chaque système d'informations.

14. Système selon l'une quelconque des revendications précédentes, dans lequel des inserts électriques peuvent être exploités à partir de tous les systèmes d'informations (GIS#1, GIS#2, GIS#3).

15. Système selon l'une quelconque des revendications précédentes, dans lequel le système est utilisé dans un véhicule de transport tel que, par exemple, des avions, trains, bus, camions, bateaux ou voitures, et/ou au moins une cuisine de bord et/ou au moins un chariot de service.

16. Système selon l'une quelconque des revendications précédentes, dans lequel le système d'informations est un système d'informations de cuisine de bord.
